(19) Europäisches Patentamt

European Patent Office

Office européen des brevets

(11) **EP 1 679 569 A2**

(12) **EUROPEAN PATENT APPLICATION**

(43) Date of publication:
**12.07.2006 Bulletin 2006/28**

(51) Int Cl.:
***G05D 16/12*** *(2006.01)*

(21) Application number: **05257018.1**

(22) Date of filing: **14.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **03.01.2005 US 28259**

(71) Applicant: **GENERAL ELECTRIC COMPANY Schenectady, NY 12345 (US)**

(72) Inventor: **Kuenzler, Glenn Howard Macedonia Ohio 44056 (US)**

(74) Representative: **Pedder, James Cuthbert et al London Patent Operation, General Electric International, Inc., 15 John Adam Street London WC2N 6LU (GB)**

(54) **Pressure regulator apparatus**

(57) A pressure regulator apparatus includes a fluid passage and a movable member configured to be positioned within the fluid passage such that a gap is formed between the movable member and a surface of the fluid passage. The movable member is adapted to travel within the fluid passage with the size of the gap increasing as the movable member travels in a direction of a fluid flow path.

FIG. 5

## Description

The present invention relates to pressure regulator apparatus, and more particularly to a pressure regulator apparatus adapted to maintain a substantially constant predetermined pressure within a fluid zone.

Conventional systems often require maintenance of an overpressure within a vessel. For example, conventional systems are known to include a vessel with a fluid inlet and a fluid outlet wherein the pressure is regulated by adjusting the flow rate through the fluid inlet. Monitoring and adjusting the fluid flow rate can be burdensome and typically results in processing imperfections. It is desirable to provide pressure regulator apparatus that operates independently of the fluid flow rate to maintain an overpressure within a fluid zone for a wide variety of systems.

In accordance with one aspect of the invention, a pressure regulator apparatus is provided with a structure including a fluid passage with a fluid inlet port and a fluid outlet port. The fluid passage includes a surface defining a fluid flow path in a direction from the fluid inlet port toward the fluid outlet port. The fluid passage includes a cross sectional area that increases in the direction of the fluid flow path. The pressure regulator apparatus further includes a movable member configured to be positioned within the fluid passage such that a gap is formed between the movable member and the surface of the fluid passage. The movable member is adapted to travel within the fluid passage with the size of the gap increasing as the movable member travels in the direction of the fluid flow path.

In accordance with another aspect of the invention, a pressure regulator apparatus includes a fluid passage for establishing a fluid path between a fluid inlet port and a fluid outlet port. The pressure regulator apparatus also includes a movable member configured to travel within the fluid passage. The movable member is provided for maintaining a substantially constant predetermined pressure of a first fluid zone with respect to a second fluid zone while fluid flows from the fluid inlet port to the fluid outlet port. The substantially constant predetermined pressure can be within a pressure range from about 0.25 inches of water to about 5 inches of water.

In accordance with a further aspect of the invention, a pressure regulator apparatus includes a fluid passage for establishing a fluid path between a fluid inlet port and a fluid outlet port. A movable member is configured to travel within the fluid passage, in accordance with

the equation $Q = \dfrac{\pi (\Delta P) R^4}{8 \mu L} \left( \left(1 - k^4\right) - \dfrac{\left(1 - k^2\right)}{\ln\left(1/k\right)} \right)$,

for maintaining a substantially constant predetermined pressure of a first fluid zone with respect to a second fluid zone while fluid flows from the fluid inlet port to the fluid outlet port. In the above equation, "Q" is a fluid flow rate, "$\Delta$P" is the substantially constant predetermined pressure, "R" is a radius of the fluid passage at a position of the movable member within the fluid passage, "k" is the ratio of an internal diameter of the fluid passage to an outer diameter of the movable member at the position, "L" is a length of the movable member and "$\mu$" is the viscosity of the fluid.

The invention will now be described in greater detail, by way of example, with reference to the drawings, in which:-

FIG. 1 illustrates a front elevational view of a pressure regulator apparatus in accordance with an embodiment of the present invention.

FIG. 2 illustrates a top plan view of the pressure regulator apparatus of FIG. 1.

FIG. 3 illustrates a sectional view of the pressure regulator apparatus along line 3-3 of FIG. 2.

FIG. 4 is a perspective view of the pressure regulator apparatus of FIG. 1.

FIG. 5 is a sectional perspective view of the pressure regulator apparatus of FIG. 4.

FIG. 6 is an enlarged illustrative view demonstrating the relationship between the movable member and the fluid passage in one embodiment of the invention.

FIG. 7 is an enlarged illustrative view demonstrating the relationship between the movable member and the fluid passage in another embodiment of the invention.

FIG. 8 is an exploded view of portions of the pressure regulator apparatus of FIG.1.

Pressure regulator apparatus of the present invention can have a wide range of applications where a predetermined positive and substantially constant pressure differential is desired between two fluid zones. Fluid zones, for example, might comprise a liquid zone, a gas zone such as an air or vapor zone, or the like. Exemplary fluid zones can also comprise a variety of structures to permit a pressure differential between the fluid zones. For instance, the first fluid zone can comprise an interior area of an object, an interior area of a housing, an interior area of a room, a fluid atmosphere (e.g., liquid or gas atmosphere) or the like.

Examples of a fluid zone arrangement can comprise a first fluid zone comprising an interior area of an object or housing and a second fluid zone comprising the interior area of a room in a building. For instance, the first fluid zone might comprise an interior area of an object being worked, such as an interior area of a quartz tube being expanded on a lathe while the second fluid zone might comprise an interior area of the room containing the lathe. Providing a substantially consistent and predetermined pressure within the quartz tube during the expansion process can reduce or prevent optical distortions in the quartz tube that might otherwise form with a fluctuating interior pressure.

In another instance, the first fluid zone might comprise an interior area of a housing, such as an incubation chamber for an infant, while the second fluid zone might comprise the interior area of the room containing the incubator. An incubation chamber for an infant can facilitate maintenance of controlled temperature, humidity and oxygen levels for optimal growth and development of the infant. Moreover, a sterile and controlled air source can feed into the incubator such that the pressure regulator apparatus maintains an optimal predetermined and substantially constant pressure within the incubator. Pressurizing the incubator can reduce concern over minor sealant leaks in the incubation chamber since positive pressure in the incubation chamber can prevent or inhibit reverse flow of air into the incubation chamber that might contain possible germs, dust, or the like. Indeed, the positive pressure of the incubation chamber will only result in fluid loss from the incubation chamber to the room containing the incubator by way of the nonsealed portions and will thereby inhibit or prevent reverse fluid flow through any such nonsealed portions.

In another instance, the first fluid zone might comprise an interior area of a control room in a building and the second fluid zone might comprise an atmosphere or an interior area in a second room in the building. A control room is often desirable to prevent contamination from germs, dust, or other contaminants. For example, the control room might comprise an operating room wherein it is desirable to maintain a sterile atmosphere free from germs or other harmful contaminants. In another example, the control room might comprise a clean room (e.g., room for painting, etc.) wherein it is desirable to maintain an environment free from dust or other debris. In these examples, a contaminant-free air source can feed air into the control room and the pressure regulator apparatus can release air from the control room while maintaining an optimal predetermined and substantially constant pressure within the control room. Pressurizing the control room can compensate for any leaks in the in the walls, ceiling, floor, etc. of the control room by preventing or inhibiting reverse flow of air containing possible germs, dust, or the like into the control room. Indeed, the positive pressure of the control room will only result in fluid loss through any nonsealed portions of the control room and will thereby inhibit or prevent reverse fluid flow through any such nonsealed portions.

It is therefore appreciated, that the concepts of pressure regulator apparatus herein can have a wide variety of applications including but not limited to the applications discussed above. For example, the pressure regulator apparatus can facilitate maintenance of a pressure in a first fluid zone of an object to facilitate processing techniques of the object. In other examples, the pressure regulator apparatus can facilitate maintenance of a pressure in a first fluid zone to prevent contamination of the first fluid zone from a second fluid zone. It will be further appreciated that the pressure regulator apparatus herein can be useful in various applications that require maintenance of a first fluid zone at a pressure that is substantially constant with respect to a second fluid zone.

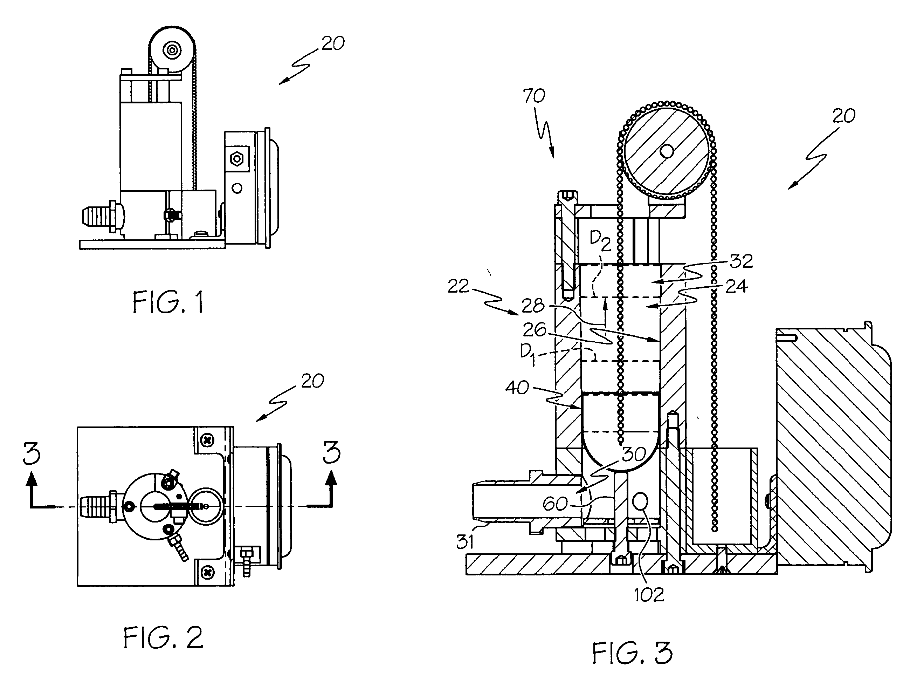

FIG. 1 illustrates a front elevational view and FIG. 2 illustrates a top plan view of an exemplary pressure regulator apparatus 20 adapted to maintain a substantially constant predetermined pressure in a system. Examples herein describe pressure regulator apparatus adapted to facilitate maintenance of a substantially constant predetermined pressure of a first pressure zone with respect to a second pressure zone, while fluid flows from the first fluid zone to the second fluid zone.

FIG. 3 illustrates a sectional view of the pressure regulator apparatus 20 along line 3-3 of FIG. 2. As shown, the pressure regulator apparatus 20 includes a structure 22 including a fluid passage 24 with a fluid inlet port 30 and a fluid outlet port 32. The fluid passage 24 includes a surface 26 defining a fluid flow path in a direction 28 from the fluid inlet port 30 toward the fluid outlet port 32.

The structure 22 can comprise a wide range of materials, shapes and sizes. In one embodiment, the structure 22 may comprise a substantially rigid structure to provide a fluid passage 24 having a substantially permanent shape. The structure can also include a variety of cross sectional shapes and sizes depending on the particular application.

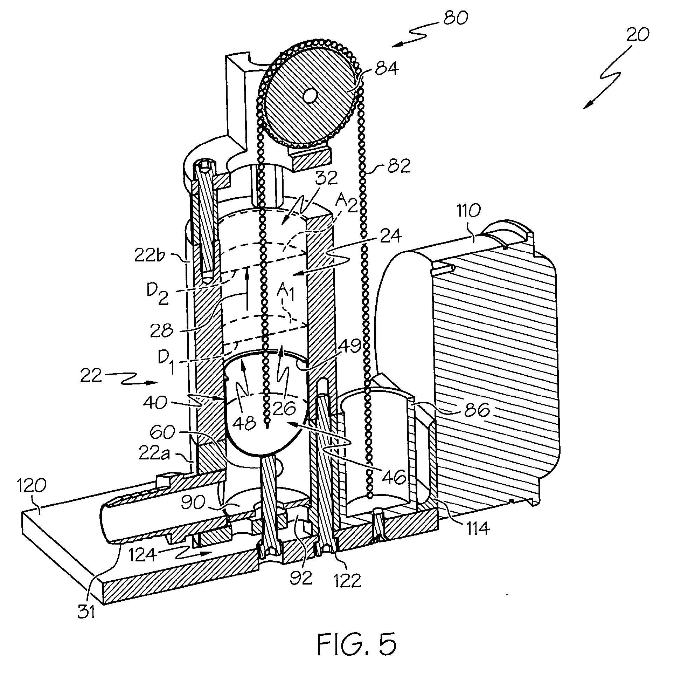

The fluid passage 24 is adapted to accommodate a wide range of fluids including liquids and gases. For example, the fluid passage 24 may accommodate water, alcohol, oil, solutions, or other liquid materials. The fluid passage 24 may also accommodate various gases such as air, vapor, oxygen, nitrogen, argon or other gaseous elements or substances. The fluid passage 24 includes a cross sectional area that increases in the direction 28 of the fluid flow path. For example, as shown in FIG. 5, the fluid passage 24 includes a cross sectional area at a first location (e.g., see $A_1$, half of which is shown in FIG. 5) that increases in the direction 28 of the fluid flow path at a second location (e.g., see $A_2$, half of which is shown in FIG. 5).

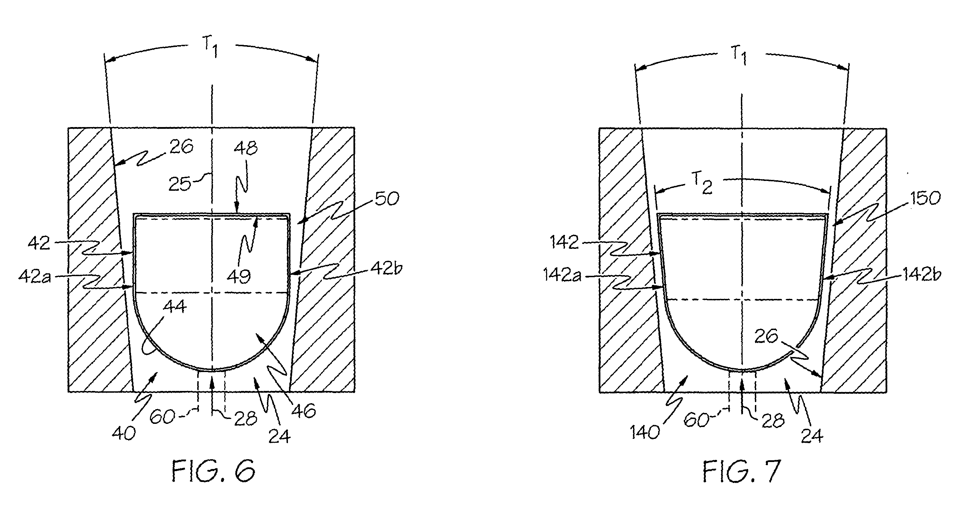

The pressure regulator apparatus 20 further includes a movable member, such as a float 40, configured to be positioned within the fluid passage such that a gap 50 (e.g., see FIG. 6) is formed between the float 40 and the surface 26 of the fluid passage. The float 40 is adapted to travel within the fluid passage 24 with the size of the gap 50 increasing as the float 40 travels in the direction 28 of the fluid flow path.

The float 40 and the fluid passage 24 can interact with one another to cause the increase in the size of the gap 50 as the float 40 travels in the direction 28 of the fluid flow path. In one embodiment, the increase in size of the gap 50 increases in a stepped pattern, wherein the gap size increases incrementally rather than substantially continuously. In another example, the size of the gap 50 might increase substantially continuously as the float travels in the direction 28 of the fluid flow path. In addition, a dimension of the gap 50 may increase linearly or nonlinearly as the float travels in the direction 28 of the fluid flow path. For example, a dimension of the gap 50 may increase linearly with respect to the distance the float travels in the direction 28 of the fluid flow path. In further examples, a dimension of the gap 50 may increase in a nonlinear function. For instance, a dimension of the gap 50 may increase in a parabolic, hyperbolic or empirical function or other nonlinear function with respect to the distance the float travels in the direction 28 of the fluid flow path.

Providing a fluid passage with a cross sectional area that increases in the direction of the fluid flow path can be achieved in a variety of ways. For example, the surface 26 of the fluid passage 24 can include at least a portion that is tapered outwardly with respect to the direction 28 of the fluid flow path. As shown, in FIG. 3 (and more exaggerated in FIG. 6), the fluid passage 24 includes an axis of symmetry 25 extending along the fluid flow path with the surface 26 comprising a truncated conical surface including a diameter that increases in the direction of the fluid flow path. For example, as shown in FIG. 3 and 5, the truncated conical surface includes a first diameter $D_1$ at a first location and a second diameter $D_2$ at a second location offset from the first location in the direction 28 of the fluid flow path. As illustrated, the truncated conical surface can also include a substantially straight cross sectional profile, as illustrated by the diametrically opposed substantially straight lines of the cross sectional profile of the surface 26 illustrated in FIGS. 3 and 6. Due to the substantially straight cross sectional profile, the diameter of the truncated conical surface increases linearly in the direction 28 of the fluid flow path. In one embodiment as shown in FIG. 6, diametrically opposed cross sectional surface profiles 26 extend along paths at a conical taper $T_1$ with respect to one another. The conical taper $T_1$ might range from less than about 2° to greater than 0°. The conical taper $T_1$ can also comprise other angles depending on the particular application.

While the illustrated example depicts the fluid passage having an axis of symmetry extending along the fluid flow path, further examples may include an asymmetrical fluid flow path. In addition, while the cross sectional areas (e.g., $A_1$, $A_2$, etc) are illustrated as substantially circular cross sectional areas, other cross sectional shapes may be employed, e.g., triangular, rectangular, oval, trapezoid, or other shapes. Providing a noncircular shape may prevent rotational movement between the float and the fluid passage. Furthermore, while the depicted fluid passage 24 includes substantially the entire surface of at least an upper portion 22b of the structure 22 being tapered outwardly with respect to the fluid flow path, further examples might include less than the entire surface being tapered outwardly. For instance, if a rectangular cross sectional area is provided, only one of the four sides might be tapered outwardly with respect to the direction 28 of the fluid flow path.

The float 40 can comprise a hollow or solid object. Float 40 may have a wide range of shapes and sizes adapted to interact with the fluid passage, such that the size of the gap 50 increases as the float 40 travels in the direction 28 of the fluid flow path. In one embodiment, at least a portion of the outer surface of the float may also be contoured to interact with the surface 26 of the fluid passage 24. In one embodiment, the float might comprise a solid or hollow spherical body. In further examples, the float may comprise lengthened side portions to provide stability for the float within the fluid passage 24. For example, as best shown in FIGS. 3, 5 and 6, the float 40 may include a cylindrical surface 42 having a substantially circular cross section in the direction 28 of the fluid flow path (e.g., see FIG. 5). In one embodiment, the float 40 can include substantially straight and parallel diametrically opposed profiles 42a, 42b as shown in FIG. 6.

In further examples, the float might also include nonparallel profiles. For example, as shown in FIG. 7, the float 140 includes a substantially circular cross section in the direction 28 of the fluid flow path, and a tapered conical surface 142 with substantially straight and nonparallel diametrically opposed profiles 142a, 142b. The float 140 also includes a conical taper $T_2$ that is approximately equal to the conical taper $T_1$ of the truncated conical surface 26 of the fluid passage 24. Providing a float with a conical taper approximately equal to a conical taper of the truncated conical surface can maintain a substantially constant minimum distance between the float and the surface of the fluid passage along the tapered conical surface of the float. Floats in accordance with the present invention may also include other surface shapes, e.g., inverted pyramid, etc., adapted to cooperate with the surface 26 of the fluid passage 24 to provide the gap 50.

Exemplary floats can also have a leading end portion with a wide variety of shapes. For example, the leading end portion of the floats can comprise a blunted end portion to initiate or enhance a desirable fluid flow profile about the float. For instance, as shown in FIG. 6, the float 40 can include a substantially hemispherical end portion 44 although other shapes are contemplated. Although not shown, the float can comprise or be provided with structure to facilitate stabilization within the fluid passage. For example, the float and fluid passage may have a noncircular cross section to prevent relative rotation therebetween. The float may also include a guide, such as ribs or a guide wire or rod to help align the float and/or prevent the float from lateral movement within the fluid passage. However, as shown, the float 40 is self stabilizing as the fluid flow passes around the float on all sides, thus keeping the float 40 from touching the surface 26 of the fluid passage 24 and thereby retaining a nearly frictionless operation.

The pressure within the first zone can be predetermined, at least in part, by the effective weight of the float. For example, the effective weight of the float might simply comprise the initial weight of the float or might comprise the sum of the initial weight of the float and an additional weight added to the float. Thus, it is contemplated that an additional weight may be added to the initial weight of the float to change the overall effective weight of the float. Changing the overall effective weight of the float allows the predetermined pressure in the first chamber to be changed allowing customization of the pressure regulator apparatus to accommodate a wide range of required pressures within the first fluid zone.

Various devices may be provided in order to change the effective weight of the float. For example, the device can comprise a supplemental weight that may be added to change the effective weight of the float. Exemplary embodiments involve placing the supplemental weight within the float or on top of the float to change the effective weight of the float. The effective weight of the float can also be changed by applying another force with a device to add or subtract from the initial weight of the float. For example, a biasing member or other device may be designed to add or subtract from the initial weight of the float to change the effective weight of the float. For instance, a compression or tension spring might be added to change the effective weight of the float.

The device can also comprise an elongated member to facilitate adjustment of the effective weight of the float. For example, as shown in the figures, the device can include an elongated member 82, such as a bead chain that may be fed to be received within a hollow interior 46 of the float 40. The elongated member 82 may be designed with a relatively small mass per unit length in order to prevent a noticeable change in the effective weight of the float due to a change in height of the float 40 within the fluid passage 24. In order to change the effective weight of the float 40, a portion of the elongated member 82 is fed into the hollow interior 46 of the float 40 wherein portions of the elongate member 82 may be coiled or otherwise disposed at a lower interior surface of the float 40. In this embodiment, the blunted (e.g., hemispherical) leading end portion 44 of the float can encourage gathering of disposed portions of the elongated member 82 at a lowermost portion of the float near the axis of symmetry 25 of the fluid passage 24 to prevent tipping of the float within the fluid passage 24.

Devices including an elongated member can also include a feed mechanism. For example, as shown, the device can include a pulley 84 adapted to substantially maintain the desired amount of the elongated member disposed within the hollow interior of the float. The pulley 84 can be frictionally maintained in the desired position, wherein the effective weight of the float may be dialed in by manually rotating the pulley. The illustrated pulley 84 includes a plurality of radially disposed cavities adapted to receive a corresponding one of the beads of the beaded chain to prevent or inhibit slipping between the elongated member and the pulley 84. It is contemplated that the pulley may include other frictional or engagement surfaces adapted to prevent slipping as desired. An optional container 86 can also be provided to house unused portions of the elongated member.

The float 40 can comprise a hollow member adapted to receive portions of the elongated member 82 as shown in FIGS. 5 and 6. For example, the float 40 can include an end portion defining a hollow opening 48 adapted to receive deployed portions of the elongated member 82. The float 40 may be designed to resist deformation to help the float maintain a desired shape relative to the fluid passage. For example, in order to increase the rigidity and structural integrity of the float 40, the end portion defining the hollow opening 48 may include a circumferential reinforcement. For instance, the end portion of the float may be crimped or the material may be manufactured with increased rigidity at the end portion. In the illustrated embodiment, the end portion includes a circumferential protrusion 49 adapted to provide circumferential reinforcement. The float 40 may be machined with the circumferential protrusion 49 or the protrusion may be added as an additional layer of material in further embodiments.

The pressure regulator apparatus can also include a stop 70 adapted to prevent disassociation between the float 40 and the fluid passage 24. In exemplary embodiments, the stop 70 can prevent expulsion of the float 40 from the fluid passage 24. In further embodiments, the stop 70 may be designed to redirect the float into the fluid passage, thereby preventing disassociation between the float and the fluid passage even if the float 40 is expelled from the fluid passage 24.

The pressure regulator apparatus 20 can further include a device 60 adapted to inhibit jamming of the float 40 within the fluid passage 24. For example, in the absence fluid pressure, the float 40 tends to settle to lower portions of the conical taper of the passage. Without the device 60, the float may become wedged or jammed within the fluid passage 24. In addition, any underpressure condition within the first fluid zone may cause the float 40 to be further sucked into the fluid passage 24, thereby preventing release of the underpressure condition and/or further jamming the float 40 within the fluid passage 24. The device adapted to inhibit jamming can comprise a wide variety of structures. In one example, the device 60 comprises a bolt although springs or other devices may be used in further embodiments. As shown in broken lines in FIG. 6, the device 60 is adapted to facilitate a resting gap between the float 40 and the surface 26 of the fluid passage 24. The resting gap prevents jamming of the float 40 within the fluid passage 24 and can also prevent the float 40 from completely plugging the fluid passage 24 in an underpressure condition. In the illustrated embodiment, the device 60 comprises a bolt, wherein the resting gap may be changed by rotating the bolt either clockwise or counterclockwise.

The pressure regulator apparatus may also include a check valve 90 adapted to substantially inhibit fluid from exiting through the check valve from the fluid passage 24. In use, positive pressure within the fluid passage 24 will press against the check valve 90 to cover and thereby inhibit fluid loss through underlying apertures 92 in the structure 22. If the inlet port 30 is in communication with an underpressure source, the device 60 prevents the float 40 from wedging in the fluid passage 24 and the check valve 90 may travel vertically along the device 60 to permit entrance of air into the fluid passage 24 by way of the apertures 92.

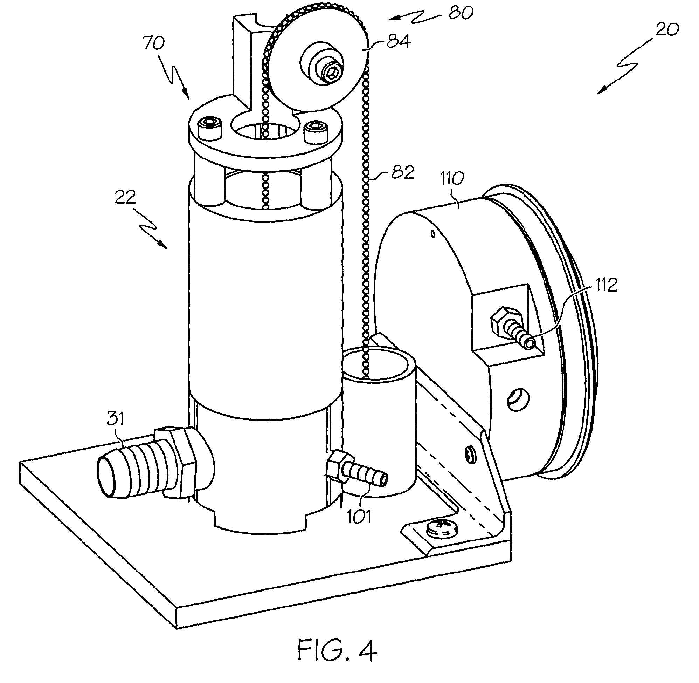

The pressure regulator apparatus can also include a test port 100 in fluid communication with the passage 24. For example, the test port 100 can comprise an aperture through a wall of the structure 22. The test port 100 is adapted to be operably connected to a fluid pressure gauge 110 to observe the pressure within a portion of the fluid passage. For example, as shown in FIGS. 4 and 5, the fluid pressure gauge 110 includes a gauge adapter 112 that may be connected with a tube or other conduit to a test port adapter 101. In use, overpressure or underpressure conditions in the fluid passage 24 upstream of the float 40 may be monitored with the fluid pressure gauge 110. In further examples, the pressure gauge 110 may be eliminated and pressure may be measured in the first fluid zone at a different location.

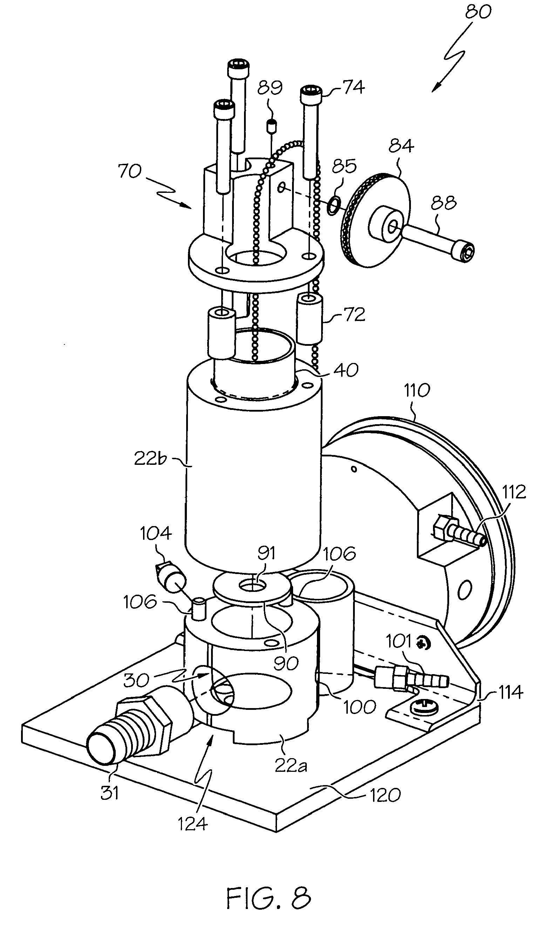

FIG. 8 is an exploded view of portions of the exemplary pressure regulator apparatus 20 of FIG. 1. An exemplary method of fabricating a pressure regulator apparatus 20 will now be described with respect to FIGS. 5 and 8. In order to simplify manufacturing, the structure 22 can be provided with a lower portion 22a and an upper portion 22b. The device 60 is engaged with the lower portion 22a of the structure 22. The lower portion 22a can be provided with an inlet adapter 31 for interfacing with a conduit providing fluid communication between the first fluid zone and the inlet port 30. A test port adapter 101 may be engaged with the test port 100. Test port adapter 101 can also be engaged with a further port 102 (see FIG. 3) to provide another optional test port location. A plug 104 may be inserted into the further port 102 when not in use. Although not shown, another plug may be inserted in the test port 100 in embodiments where the pressure gauge 110 is not incorporated in the apparatus. The lower portion 22a of the structure 22 is further provided with pins 106 to provide alignment between the lower portion 22a and an upper portion 22b of the structure 22.

A central aperture 91 of the check valve 90 may then be placed over the upper portion of the device 60 such that the check valve 90 rests over the apertures 92 of the lower portion 22a. The upper portion 22b is then placed over the lower portion 22a such that the alignment pins 106 engage corresponding apertures (not shown) in a bottom end of the upper portion 22b. The lower and upper portions 22a, 22b are then mounted to the support plate 120 with a mounting bolt 122. The structure 22 can also be designed with air passages 124 between the support plate 120 and the lower portion 22a to allow air flow through the apertures 92 in an underpressure condition.

The float 40 is then inserted into the fluid passage 24 and the stop 70 is subsequently mounted with respect to the structure 22 to prevent disassociation between the float 40 and the fluid passage 24. The stop 70 can be offset from the structure 22 to reduce or prevent restriction of fluid flow through the fluid outlet port 32. For example, the stop 70 may include one or more spacers 72 adapted to offset the stop 70 from the structure 22. The stop 70 may be mounted to the structure 22 by way of mounting bolts 74 extending through the spacers 72.

The pulley 84 can be mounted to the stop 70 with a mounting bolt 88. A wave spring 85 or bushing may also be provided to offset the pulley 84 from the stop 70 and enhance functionality of the pulley 84. Once an appropriate level of torque is applied to the mounting bolt 88, a set screw 89 may be provided to prevent loosening of the mounting bolt 88.

If provided, the gauge 110 may be mounted to the support plate 120 by way of a mounting bracket 114 and a tube or other conduit may be connected between the test port adapter 101 and the gauge adapter 112. The container 86, if provided, may also be mounted to the support plate 120 by a bolt or other mounting method.

In use, the device 60 can be adjusted to establish a resting gap between the float 40 and the surface 26 of the fluid passage 24. The inlet port 30 is then placed in fluid communication with the first fluid zone. For example, a tube or conduit can engage the inlet adapter 31 and an adapter associated with the first fluid zone. Fluid is then fed into the first fluid zone and fluid exiting the first fluid zone enters the fluid inlet port 30 of the fluid passage 24 and levitates the float 40 within the fluid passage 24. The height of the float 40 is dependent on the fluid flow rate through the fluid passage and substantially maintains a constant pressure within the first fluid zone independent of the fluid flow rate. Thus, a reduced fluid flow rate will result in lowering of the float 40 in the fluid passage 24 such that the size of the gap between the float 40 and the surface 26 of the fluid passage is reduced. Similarly, an increased fluid flow rate will result in raising the float 40 in the fluid passage 24 such that the size of the gap between the float 40 and the surface 26 of the fluid passage is increased. Therefore, fluctuations of the fluid flow rate, within a working range, simply changes the size of the gap and the elevation of the float within the fluid passage while the pressure remains substantially constant. It is desirable to maintain the fluid flow rate above the minimum value necessary to levitate the float 40 from the device 60 and to maintain the fluid flow rate below a maximum value where the float engages the stop 70 or where the float is expelled from the fluid passage 24.

The flow conditions can be calculated to close approximation by use of an the following analytical flow solution to annular flow, given in R. Byron Bird, Warren E. Stewart and Edwin N. Lightfoot, <u>Transport Phenom-</u>

ena, 53 (2d. ed. 2002):

$$Q = \frac{\pi(\Delta P)R^4}{8\mu L}\left((1-k^4)-\frac{(1-k^2)}{\ln(1/k)}\right)$$

In the above equation, "Q" is the fluid flow rate, "ΔP" is the pressure difference, "R" is the radius of the tube at the levitation position, "k" is the ratio of the internal diameter of the fluid passage to the outer diameter of the float at the levitation position, "L" is the length of the float and "μ" is the viscosity of the fluid.

When plotting the fluid flow rate vs. the float height within the fluid passage, a nonlinear upwardly concave graph may be observed. It is believed that this upwardly concave relationship is due to the conical taper having a linear profile as previously described with respect to FIG. 6. It is contemplated that the upwardly concave relationship between fluid flow rate vs. the float height within the fluid passage may be changed, for example, by modifying the shape of the tapered fluid flow passage. For example, it is contemplated, that the passage may be shaped to obtain a substantially linear relationship between the fluid flow rate vs. the float height within the fluid passage. The shape of the taper might comprise a parabolic, hyperbolic, empirical or other shaped taper to provide the desired impact on the functional relationship between the fluid flow rate vs. the float height within the fluid passage. Indeed, by appropriately shaping the taper, functional relationship can comprise a straight, concave or convex functional relationship.

In exemplary embodiments, once the float 40 is appropriately levitated within the fluid passage 24, a pressure reading may be made with the pressure gauge 110. If the pressure requires adjustment, the pulley 84 may be manually turned to add or remove portions of the deployed elongated member 82 into the hollow interior 46 of the float 40. For example, to increase the pressure in the first zone, the pulley 84 may be rotated to dispose additional portions of the elongated member 82 within the hollow interior 46. The increased effective weight of the float 40 causes an increased pressure within the first fluid zone while the float 40 is levitated within the passage 24. Similarly, to reduce the pressure within the first zone, the pulley 84 may be rotated the opposite direction to remove portions of the elongated member 82 from the hollow interior 46 of the float. The reduced effective weight of the float 40 causes a reduced pressure within the first fluid zone while the float 40 is levitated within the passage 24. It is also contemplated that the effective weight of the float 40 may be changed by substituting one float 40 for another float having a different weight. Furthermore, one or more objects may be dropped into the float to provide a rough adjustment while the elongated member 82 can be used to fine tune the weight of the float 40. In further examples, one or more of the dropped objects might include a string to allow easy withdrawal of the object if needed.

If an underpressure occurs in the first fluid zone, the pressure regulator apparatus 20 is adapted to prevent underpressure build up by way of the check valve 90. In an underpressure condition, the check valve 90 levitates upward along the device 60 to permit fluid flow into the fluid passage 24 by way of the apertures 92. In contrast, during use with an overpressure in the first fluid zone, the check valve 90 is pressed against the apertures 92 to substantially inhibit fluid from exiting through the check valve 90 from the fluid passage 24.

As described above, pressure regulator apparatus in accordance with the present invention can facilitate maintenance of a substantially constant predetermined pressure of a first pressure zone with respect to a second pressure zone, while fluid flows from the first fluid zone to the second fluid zone. The predetermined pressure can comprise a wide range of pressures and can facilitate a relatively large or relatively small pressure differential. As further discussed above, the predetermined pressure may be adjustable. For example, the predetermined pressure can comprise from about 0.25 inches of water to about 2 inches of water. I another example, the predetermined pressure can comprise from about 0.25 inches of water to about 2 inches of water. In another example, the predetermined pressure can comprise from about 0.25 inches of water to about 1 inch of water. In further examples, the predetermined pressure may fall within other ranges. For example, the predetermined pressure may comprise greater than about 2 inches of water and might comprise greater than 0 inches of water to about 0.25 inches of water. Providing relative smaller pressure differentials can be beneficial to facilitate processing techniques of certain objects. A relatively small pressure differential may also help prevent contamination of a first fluid zone from a second fluid zone without placing objects or individuals in the first fluid zone under uncomfortable or possibly dangerous relatively larger pressure differentials.

The various components herein may be formed from a wide variety of materials sufficient to provide structural integrity and maintain functionality of the pressure regulator apparatus. At least some or all components, for example, may be fabricated from stainless steel, aluminum, plastics, composites of the like.

## Claims

1. A pressure regulator apparatus comprising:

   a structure including a fluid passage with a fluid inlet port and a fluid outlet port, the fluid passage including a surface defining a fluid flow path in a direction from the fluid inlet port toward the fluid outlet port, wherein the fluid passage includes a cross sectional area that increases in the direction of the fluid flow path; and
a movable member configured to be positioned within the fluid passage such that a gap is formed between the movable member and the surface of the fluid passage, wherein the movable member is adapted to travel within the fluid passage with the size of the gap increasing as the movable member travels in the direction of the fluid flow path.

2. The pressure regulator apparatus of claim 1, wherein the movable member is configured to be positioned within the fluid passage such that the size of the gap increases substantially continuously as the movable member travels in the direction of the fluid flow path, and
the fluid passage has an axis of symmetry extending along the fluid flow path.

3. The pressure regulator apparatus of any of claims 1 - 2, wherein the surface of the fluid passage includes at least a portion that is tapered outwardly with respect to the direction of the fluid flow path.

4. The pressure regulator apparatus of any of claims 1 - 3, wherein the tapered surface portion comprises at least one of: a) a substantially straight cross sectional profile; and b) a truncated conical surface, having a diameter that increases linearly in the direction of the fluid flow path.

5. The pressure regulator apparatus of any of claims 1 - 4, wherein the tapered surface portion comprises at least one of: a) a substantially straight cross sectional profile; and b) a truncated conical surface having a conical taper of less than about 2 degrees and greater than zero degrees.

6. The pressure regulator apparatus of any of claims 1 - 5, wherein the movable member comprises a tapered conical surface or a cylindrical surface.

7. The pressure regulator apparatus of any of claims 1 - 6, wherein the movable member comprises a hollow member having an end portion defining an opening.

8. The pressure regulator apparatus of any of claims 1 - 7, wherein the movable member includes circumferential reinforcement at the end portion of the hollow member.

9. The pressure regulator apparatus of any of claims 1 - 8, further comprising at least one of:

   a) device adapted to inhibit jamming of the movable member within the fluid passage, wherein the device is adapted to facilitate a resting gap between the movable member and the surface of the fluid passage;
b) a stop adapted to prevent disassociation between the movable member and the fluid passage;
c) a device adapted to change the effective weight of the movable member, wherein the device comprises an elongated member having a feed mechanism;
d) a check valve adapted to substantially inhibit fluid from exiting through the check valve from the fluid passage; and
e) a test port in fluid communication with the fluid passage and adapted to be operably connected to a fluid pressure gauge to determine the pressure within a portion of the fluid passage.

10. A pressure regulator apparatus including:

    a fluid passage for establishing a fluid path between a fluid inlet port and a fluid outlet port,
    a movable member configured to travel within the fluid passage for maintaining a substantially constant predetermined pressure of a first fluid zone with respect to a second fluid zone at a pressure range from about 0.25 inches of water to about 5 inches of water, while fluid flows from the fluid inlet port to the fluid outlet port.

11. A pressure regulator apparatus including:

    a fluid passage for establishing a fluid path between a fluid inlet port and a fluid outlet port,
    a movable member configured to travel within the fluid passage, in accordance with the equation

    $$Q = \frac{\pi(\Delta P)R^4}{8\mu L}\left(\left(1 - k^4\right) - \frac{\left(1 - k^2\right)}{\ln(1/k)}\right),$$

    for maintaining a substantially constant predetermined pressure of a first fluid zone with respect to a second fluid zone while fluid flows from the fluid inlet port to the fluid outlet port, wherein "Q" is a fluid flow rate, "$\Delta P$" is the substantially constant predetermined pressure, "R" is a radius of the fluid passage at a position of the movable member within the fluid passage, "k" is the ratio of an internal diameter of the fluid passage to an outer diameter of the movable member at the position, "L" is a length of the movable member and "$\mu$" is the viscosity of the fluid.

FIG. 3

FIG. 1

FIG. 2

FIG. 4

FIG.5

FIG. 6

FIG. 7

EP 1 679 569 A2

FIG. 8